# DEMANDE DE BREVET EUROPEEN

(11) **EP 2 187 093 A1**
(43) Date de publication de la demande: **19.05.2010**
(21) Numéro de dépôt: 09176263.3
(22) Date de dépôt: 17.11.2009
(51) Int. Cl.: F16H 3/12, F16H 61/04

(54) **Système de synchronisation adapté à synchroniser un premier élément tournant avec un deuxième élément pour ajuster la vitesse de rotation du premier élément tournant à un régime cible**

(30) Priorité: 18.11.2008 FR 0857827
(71) Demandeur: Peugeot Citroën Automobiles SA, 78140 Vélizy-Villacoublay (FR)
(72) Inventeur: Le Dren, Arnaud, 91230, MONTGERON (FR)

(57) **Abrégé**

Système de synchronisation à un régime cible d'un premier élément tournant (18) avec un deuxième élément (36), comportant un organe tournant de synchronisation (34) et deux dispositifs coaxiaux d'accouplement (40, 42) ayant chacun d'une part, une partie axialement fixe (40A, 42A) dont l'une (40A) peut tourner solidairement avec le premier élément (18) et l'autre (42A) est reliée au deuxième élément (36), et d'autre part une partie axialement mobile (40B, 42B) solidaire de l'organe (34). Ces parties mobiles (40B, 42B) sont accouplées alternativement avec ces parties fixes (40A, 42A) par déplacement axial commandé de l'organe (34) afin d'ajuster alternativement le régime des parties fixes (40A, 42A) et de l'organe (34). Application à la synchronisation d'engrenages (16) et de baladeurs (20) de boîte de vitesses.

## Description

"Système de synchronisation adapté à synchroniser un premier élément tournant avec un deuxième élément pour ajuster la vitesse de rotation du premier élément tournant à un régime cible"

La présente invention est relative à un système de synchronisation adapté à synchroniser un premier élément tournant avec un deuxième élément pour ajuster la vitesse de rotation du premier élément tournant à un régime cible.

Des systèmes de synchronisation sont connus dans les boîtes de vitesses de véhicule automobile, et plus particulièrement pour ajuster les vitesses de rotation d'un engrenage monté fou sur un arbre de la boîte de vitesses et d'un baladeur monté coulissant sur l'arbre entre une position découplée de l'engrenage et une position accouplée à l'engrenage, le baladeur pouvant être passé de sa position accouplée à sa position découplée quand la différence de vitesse entre l'arbre et l'engrenage est inférieure à un seuil déterminé correspondant un régime cible de l'arbre.

Pour synchroniser des éléments tels que par exemple un arbre et un engrenage monté fou sur cet arbre dans une boîte de vitesses telle qu'une boîte de vitesses équipant un véhicule de tourisme, il est connu d'interposer entre ledit arbre et ledit engrenage un synchroniseur à crabots dont les dentures sont portées d'une part par l'engrenage et d'autre part par une couronne mobile dans l'axe de l'arbre. De tels synchroniseurs comportent un anneau de friction permettant d'ajuster les vitesses de rotation de l'engrenage et de la couronne portant les crabots. L'anneau de friction tout comme les crabots sont limités d'une part en couple à transmettre et d'autre part en rapidité de friction et de crabotage. Les limites en rapidité et en couple à transmettre sont problématiques par exemple dans le cas d'un véhicule équipé d'un moteur diesel à fort couple et d'une boîte de vitesses qui est pilotée automatiquement et qui a des synchroniseurs tels que décrits ci-dessus. En effet, pour garantir de bonnes impressions de conduite, de telles boîtes pilotées doivent exécuter les changements de rapport sans à coups et très rapidement, c'est-à-dire plus rapidement que ne le fait un conducteur actionnant une boîte manuelle et son embrayage.

Pour exécuter des changements de rapport très rapidement, une solution connue consiste à ne pas équiper la boîte de vitesses de synchroniseurs à couronnes et anneaux de friction. Dans ce cas, les crabots sont d'une part conservés sur l'engrenage monté fou sur l'arbre et d'autre part aménagés sur un baladeur monté coulissant sur l'arbre considéré. Pour chaque montée ou descente de rapport, il faut synchroniser finement l'arbre de boîte avec l'engrenage du rapport à engager pour que le crabotage des dentures des crabots de l'engrenage et du baladeur soit effectué sans choc et éventuellement sous couple. Lors d'un tel crabotage, il existe un seuil d'écart de régime entre l'arbre et l'engrenage à craboter en dessous duquel le choc de crabotage est imperceptible, ce seuil étant environ de quelques dizaines de tours par minute. Pour ne pas dépasser le seuil d'écart de régime, il faut alors freiner ou d'accélérer l'arbre suffisamment finement par divers pilotages d'éléments internes de la boîte de vitesses et du régime moteur du véhicule.

La présente invention a notamment pour but de remédier aux inconvénients de l'art antérieur.

A cet effet, l'invention a pour objet un système de synchronisation adapté à synchroniser un premier élément tournant ayant une première inertie avec un deuxième élément ayant une deuxième inertie pour ajuster la vitesse de rotation du premier élément tournant à un régime cible, le système de synchronisation comportant un organe tournant de synchronisation et deux dispositifs coaxiaux d'accouplement ayant chacun d'une part une partie axialement mobile solidaire de l'organe tournant de synchronisation et d'autre part une partie axialement fixe, l'une des parties axialement fixes étant prévue pour tourner solidairement avec le premier élément tournant et l'autre des parties axialement fixes étant prévue pour être reliée au deuxième élément, les parties axialement mobiles pouvant être accouplées alternativement avec l'une et l'autre des parties axialement fixes par déplacement axial commandé de l'organe tournant de synchronisation pour que la vitesse de rotation des parties axialement fixes soient alternativement ajustées à celle de l'organe tournant de synchronisation par transfert alternatif de la première inertie et de la deuxième inertie à l'organe tournant de synchronisation de manière que l'inertie de rotation de l'organe tournant de synchronisation fasse varier la vitesse de rotation du premier élément tournant jusqu'à ce que ce dernier atteigne son régime cible.

Grâce à ces dispositions, lors de la synchronisation de deux éléments, l'invention permet d'éviter qu'il ne soit produit un choc important, en proposant une synchronisation pendant laquelle des petits chocs successifs imperceptibles sont produits.

Dans divers modes de réalisation du système selon l'invention, on peut éventuellement avoir recours en outre à l'une et/ou à l'autre des dispositions suivantes :
- la partie axialement fixe et la partie axialement mobile des dispositifs d'accouplement sont des disques d'embrayage à accouplement brutal ;
- l'organe tournant de synchronisation comporte deux arbres reliés entre eux par glissière de manière à être axialement mobiles pour accoupler ou découpler la partie axialement fixe et la partie axialement mobile des dispositifs d'accouplement indépendamment les unes des autres ;
- les dispositifs d'accouplement comportent, sur les parties axialement fixes et les parties axialement mobiles, des crabots pourvus de dentures dont des faces biseautées entrant en contact d'engrènement pour crabotage provoquent automatiquement un dégagement des dentures par coulissement de l'organe tournant de synchronisation ;
- au moins un des dispositifs d'accouplement est non progressif ;

Par ailleurs, l'invention a également pour objet un sous ensemble de boîte de vitesses de véhicule, adapté à être monté dans la boîte de vitesses pour ajuster les vitesses de rotation d'un engrenage monté fou sur un arbre de la boîte de vitesses et d'un baladeur monté coulissant sur l'arbre entre une position découplée de l'engrenage et une position accouplée à l'engrenage, le baladeur pouvant être passé de sa position accouplée à sa position découplée quand la différence de vitesse entre l'arbre et l'engrenage est inférieure à un seuil déterminé correspondant à un régime cible de l'arbre, **caractérisé en ce que** le sous ensemble comporte un système de synchronisation conforme à l'invention dont l'une des parties axialement fixes est prévue pour tourner solidairement avec l'arbre de la boîte de vitesses en constituant le premier élément tournant ayant la première inertie et l'autre des parties axialement fixes est prévue pour être reliée à un élément de la boîte de vitesses par rapport auquel l'arbre tourne, ce dernier élément constituant le deuxième élément ayant la deuxième inertie, de manière que l'inertie de rotation de l'organe tournant de synchronisation fasse varier la vitesse de rotation de l'arbre de la boîte de vitesses jusqu'à ce que ce dernier atteigne son régime cible quand les parties axialement mobiles sont accouplées alternativement avec l'une et l'autre des parties axialement fixes par déplacement axial commandé de l'organe tournant de synchronisation.

Par ailleurs, l'invention a également pour objet une boîte de vitesses pour véhicule, notamment pour véhicule automobile, comportant au moins un engrenage monté fou sur un arbre de la boîte de vitesses et un baladeur monté coulissant sur l'arbre entre une position découplée de l'engrenage et une position accouplée à l'engrenage, le baladeur pouvant être passé de sa position accouplée à sa position découplée quand la différence de vitesse entre l'arbre et l'engrenage est inférieure à un seuil déterminé correspondant à un régime cible de l'arbre. La rotation de l'arbre à sa vitesse cible est établie par un sous ensemble conforme à l'invention, l'arbre étant lié à rotation avec l'une des parties axialement fixe des dispositifs d'accouplement et l'engrenage étant un engrenage de transmission de couple d'un rapport de démultiplication de la boîte de vitesses.

Dans un mode de réalisation de la boîte de vitesses selon l'invention, l'élément de la boîte de vitesses auquel est reliée l'une des parties fixes des dispositifs d'accouplement est une partie de bâti de la boîte de vitesses, l'organe tournant de synchronisation pouvant d'une part coulisser par rapport au bâti de la boîte de vitesses quand la partie axialement mobile et la partie axialement fixe des dispositifs d'accouplement sont entre une position accouplée et une position découplée et d'autre part freiner progressivement l'arbre portant l'engrenage monté fou et le baladeur par accouplement alternatif des dispositifs d'accouplement.

Par ailleurs, l'invention a également pour objet un procédé de fonctionnement d'une boîte de vitesses conforme à l'invention. Le procédé comporte au moins un cycle d'ajustement des vitesses de rotation de l'arbre de la boîte de vitesses portant l'engrenage fou et le baladeur à un régime cible, lequel cycle comportant au moins une première étape dans laquelle ledit arbre et l'organe tournant de synchronisation sont accouplés puis découplés par action du dispositif d'accouplement dont la partie axialement fixe tourne solidairement avec l'arbre, une deuxième étape consécutive à la première étape, dans laquelle l'organe tournant de synchronisation et l'élément de la boîte de vitesses sont accouplés puis découplés par action de l'autre des dispositifs d'accouplement et une troisième étape dans laquelle l'organe tournant de synchronisation et l'arbre sont encore accouplés.

D'autres buts, caractéristiques et avantages de l'invention apparaîtront au cours de la description suivante de plusieurs modes de réalisation, donnés à titre d'exemples non limitatifs, en regard des dessins joints.

Sur les dessins :
- la figure 1 est une vue en coupe schématique d'un système de synchronisation selon l'invention, tel que monté dans une boîte de vitesses ;
- la figure 2 est une vue de dessus d'une partie du système de synchronisation de la figure 1 ;
- la figure 3 est une vue schématique d'une variante du système de synchronisation selon l'invention, tel que monté dans une partie de boîte de vitesses ;
- la figure 4 est une vue schématique d'une variante du montage du système de synchronisation selon l'invention dans une partie de boîte de vitesses ;
- la figure 5 est une vue schématique d'une variante d'une partie du système de synchronisation selon l'invention.

Sur les différentes figures, les mêmes références désignent des éléments identiques ou similaires.

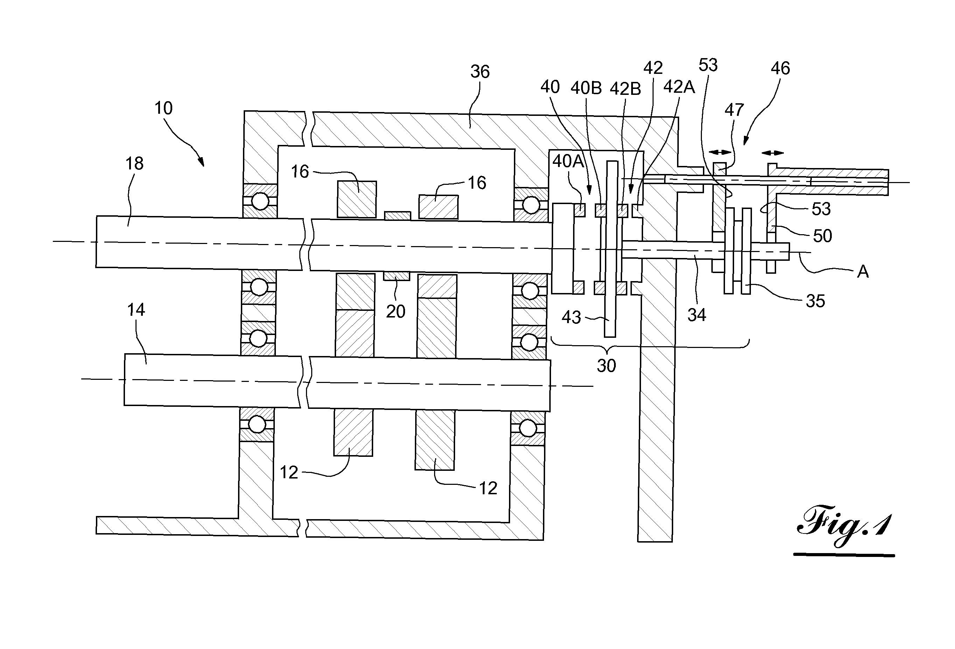

Dans une boîte de vitesses 10 de véhicule automobile telle que celle représentée à la figure 1, des engrenages 12 sont montés fixes sur un arbre secondaire 14 relié au roues motrices du véhicule et des engrenages 16 sont montés fous sur un arbre primaire 18 relié au moteur du véhicule. Quand un rapport est engagé, un engrenage 16 de la boîte doit être solidaire à rotation de l'arbre primaire 18, par accouplement de dentures de crabots aménagés d'une part sur l'engrenage 16 et d'autre part sur un moyeu baladeur 20 monté coulissant sur l'arbre primaire 18. Pour engager un rapport en crabotant l'engrenage 16 et le moyeu baladeur 20, il faut que le régime de l'engrenage 16, dépendant de la vitesse du véhicule, soit proche du régime de l'arbre primaire 18, dépendant du régime moteur. Dans la pratique, un écart d'environ 300 tours par minutes entre le régime de l'engrenage 16 et le régime de l'arbre primaire 18 permet un crabotage sans choc perceptible.

Pour égaliser les régimes de l'engrenage 16 et de l'arbre primaire 18 avant crabotage sans choc, quand l'écart de régime est supérieur à 300 tours par minute, il faut accélérer l'arbre primaire 18 lors d'une descente de rapport, c'est-à-dire pour rétrograder, et freiner l'arbre primaire 18 lors d'une montée de rapport. Le régime de l'arbre primaire 18 peut être accéléré par accélération du moteur alors que la boîte est au point mort, c'est-à-dire quand le moyeu baladeur 20 n'est pas craboté avec un engrenage 16, et l'embrayage du véhicule est embrayé. Quand l'embrayage du véhicule est en position débrayée le régime de l'arbre primaire 18 peut être freiné.

Dans le mode de réalisation de l'application représentée à la figure 1, l'arbre primaire 18 est freiné en actionnant un système de synchronisation 30 selon l'invention.

Le système de synchronisation 30 comporte un arbre de synchronisation 34 d'axe A coaxial à l'arbre primaire 18. L'arbre de synchronisation 34 est monté coulissant par rapport à un bâti 36 de la boîte de vitesses 10. A l'une de ses extrémités, l'arbre de synchronisation 34 comporte un flasque 35 servant à la commande du positionnement axial de l'arbre 34 par rapport au bâti 36.

Le système de synchronisation 30 comporte un premier dispositif d'accouplement 40 permettant d'accoupler à rotation l'arbre de synchronisation 34 et l'arbre primaire 18. Le système de synchronisation 30 comporte un deuxième dispositif d'accouplement 42 permettant d'accoupler l'arbre de synchronisation 34 et le bâti 36.

Chacun des dispositifs d'accouplement 40 et 42 comporte une partie axialement fixe 40A et 42A. Les parties axialement fixes 40A et 42A sont solidaires respectivement du bâti 36 et de l'arbre primaire 18.

Chacun des dispositifs d'accouplement 40 et 42 comporte une partie axialement mobile 40B et 42B solidaire d'un corps 43 en forme de disque fixé à l'arbre 34. Les parties axialement mobiles 40B et 42B sont solidaires de l'une des extrémités de l'arbre de synchronisation 34.

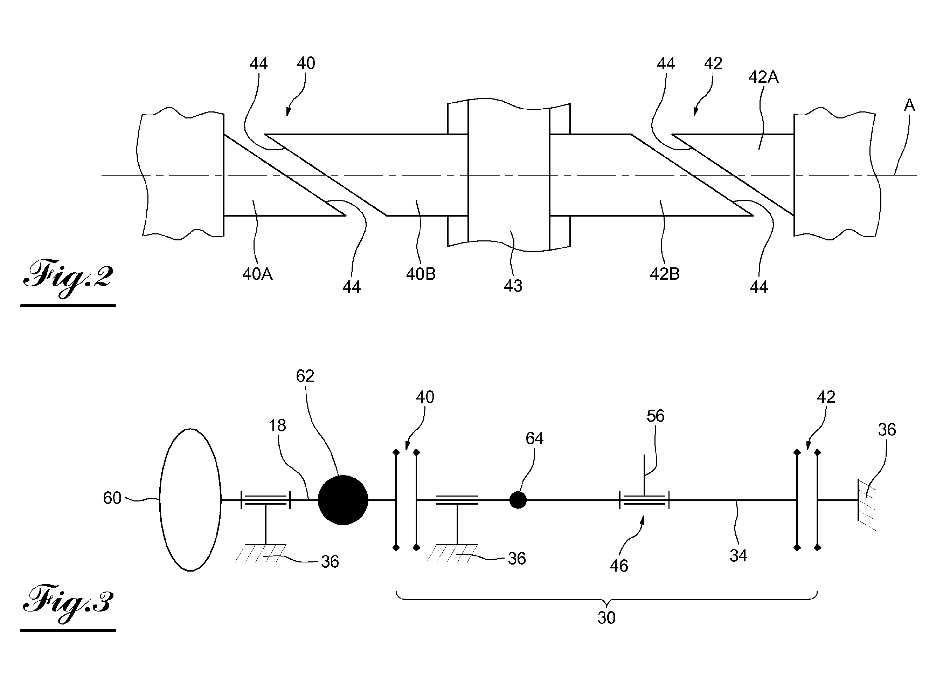

Les parties axialement fixes 40A et 42A, tout comme les parties axialement mobiles 40B et 42B, sont pourvues de dentures de crabots 44 (figure 2) qui s'engrènent en fonction de la position axiale de l'arbre de synchronisation 34.

Dans le mode de réalisation des figures 1 et 2, les dispositifs d'accouplement 40 et 42 ont des dentures de crabots 44 à auto éjection. De telles dentures sont biseautées dans le sens de la rotation, comme représenté schématiquement à la figure 2 montrant les dentures dans une vue de type vue de dessus prise radialement à l'axe A qui est dans un plan décalé par rapport aux dentures 44. Les dentures 44 n'engrènent pas quand leur différentiel de vitesse dépasse un seuil déterminé car elles glissent axialement quand ledit différentiel de vitesse dépasse ledit seuil. Le glissement des dentures 44 dans un sens inverse dans chacun des dispositifs d'accouplement 40 et 42 entraîne un phénomène de rebonds alternatif des dentures de chacun des dispositifs d'accouplement 40 et 42, l'axe 34 étant libre de coulisser pour autoriser ces rebonds.

A cet effet, un ensemble de commande 46 autorisant le coulissement de l'arbre de synchronisation 34 comporte une fourchette de commande 47 axialement mobile d'un côté du flasque 35 et une fourchette de commande 50 mobile de l'autre côté du flasque 35. Chacune des fourchettes 47 et 50 comporte une face d'appui 53 en regard de deux faces opposées du flasque 35.

Les deux fourchettes peuvent se déplacer indépendamment, le cas échéant dans des sens opposés pour laisser un jeu entre les faces d'appui 53. En outre, chacune des fourchettes peut déplacer le flasque 35 et pousser l'autre fourchette par l'intermédiaire dudit flasque.

Les fourchettes peuvent être déplacées par tout actionneur connu par exemple un vérin magnétique, un moteur électrique actionnant une crémaillère....

Les fourchettes 47 et 50 peuvent occuper une position dite avancée dans laquelle elles sont décalées à fond vers la gauche quand on prend en considération le schéma de boîte de vitesses de la figure 1. Dans ce cas, elles forcent l'accouplement de la partie fixe 40A et de la partie mobile 40B du dispositif d'accouplement 40. Dans ce cas, c'est la fourchette 50 qui pousse le flasque 35 et la fourchette 47 et l'arbre de synchronisation 34 est accouplé avec l'arbre 18.

Les fourchettes 47 et 50 peuvent occuper une position dite reculée dans laquelle elles sont décalées à fond vers la droite quand on prend en considération le schéma de boîte de vitesses de la figure 1. Dans ce cas, elles forcent l'accouplement de la partie fixe 42A et de la partie mobile 42B du dispositif d'accouplement 42. Dans ce cas, c'est la fourchette 47 qui pousse le flasque 35 et la fourchette 50 et l'arbre de synchronisation 34 est accouplé avec le bâti 36.

Quand la fourchette 47 est en position avancée et la fourchette 50 est en position reculée, le jeu présent entre les faces d'appui 53 des fourchettes 47 et 53 permet un déplacement libre du flasque 35 selon l'axe A.

Si une impulsion de poussée de la fourchette 53 est appliquée au flasque 35, cette impulsion amenant les fourchettes en position avancée, et si la fourchette 53 revient aussitôt en position reculée alors que la fourchette 47 reste en position avancée, l'auto éjection des crabots 44 est mise en oeuvre et l'arbre 18 est freiné progressivement et sans choc perceptible.

Avantageusement, comme décrit ci-dessus, la synchronisation de l'engrenage 16 à craboter avec le moyeu baladeur 20 solidaire à rotation de l'arbre secondaire peut âtre effectuée progressivement et sans choc en utilisant le dispositif de synchronisation 30 dans lequel l'arbre de synchronisation 34 oscille entre l'arbre primaire 18 et le bâti 36. Lors des oscillations, l'arbre de synchronisation 34 transfert son énergie d'inertie entre l'arbre primaire 18 et le bâti 36, en divisant l'énergie initiale de synchronisation en de multiples petits chocs de crabotage des dentures 44 dans les dispositifs d'accouplement 40 et 42.

Avantageusement, le système de synchronisation sert de façon centralisée pour tous les rapports de la boîte de vitesses, au bénéfice du coût, de l'encombrement et de la masse de cette dernière.

Dans le mode de réalisation représenté à la figure 3, le système de synchronisation 30, toujours interposé entre l'arbre primaire 18 et le bâti 36, comporte un embrayage à accouplement brutal, c'est-à-dire un embrayage sans frottement et ne patinant pas à sa fermeture, à chacune des extrémités de l'arbre de synchronisation 34 pour constituer les dispositifs d'accouplement 40 et 42. Les deux embrayages 40 et 42 ne nécessitent pas de pilotage fin et sont commandés directement fermé ou ouvert de façon non progressive. Ils se comportent en réalité comme des crabots pour ce qui concerne la vitesse d'accouplement. L'ensemble de commande 46 comporte par exemple une simple fourchette 56 actionnée par une crémaillère actionnée par un moteur. La fourchette 56 commandée axialement permet alternativement la fermeture de l'un ou l'autre des embrayages afin de freiner l'arbre primaire 18. A chaque fermeture de l'embrayage 40, l'inertie de l'inertie de l'arbre de synchronisation 34 est transmise à l'arbre primaire 18, la vitesse de l'arbre de synchronisation 34 étant abaissée par accouplement avec le bâti 36 à chaque fermeture de l'embrayage 42. A la figure 3, l'ovale 60 dessiné sur l'arbre 18 symbolise les engrenages fous et le moyeu baladeur, le cercle noir 62 symbolise l'inertie de l'arbre 18 et le cercle noir 64 symbolise l'inertie, plus petite, de l'arbre de synchronisation 34.

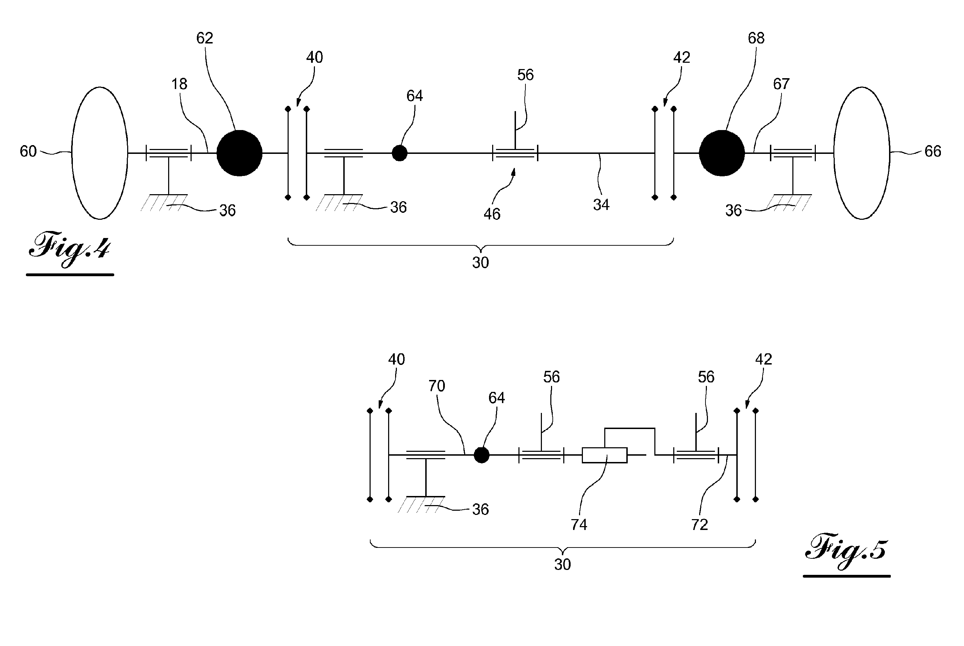

Dans le mode de réalisation représenté à la figure 4, le système de synchronisation 30 est interposé entre l'arbre 18 constituant un premier élément tournant à synchroniser et un deuxième élément tournant 66. Le deuxième élément tournant 66 est par exemple un moteur faisant tourner un arbre 67 pour freiner ou accélérer l'arbre 34 par l'intermédiaire de l'embrayage à accouplement brutal 42 respectivement lors d'un changement de rapport montant ou descendant selon que le deuxième élément 66 tourne plus lentement ou plus vite que l'arbre de synchronisation 34 et que l'arbre primaire 18. L'inertie du deuxième élément 66 est symbolisée par le cercle 68 qui est de même taille que le cercle 64 symbolisant l'inertie de l'arbre 34.

Dans le mode de réalisation représenté à la figure 5, le système de synchronisation 30 est représenté en tant que système autonome non installé dans une boîte de vitesses comme les exemples de réalisation précédents. Dans ce mode de réalisation de système de synchronisation 30, un ensemble à glissière comportant deux arbres coaxiaux 70 et 72 reliés par glissière 74 est employé à la place de l'arbre de synchronisation. Chacun des arbres 70 et 72 est axialement commandé par une fourchette 56 permettant de fermer ou d'ouvrir les embrayages à accouplement brutal 40 et 42 indépendamment l'un de l'autre. Les embrayages 40 et 42 peuvent alors être tous les deux fermés, par exemple pour freiner instantanément l'arbre primaire 18 dans le cas d'un montage du type de celui des figures 1 et 3 si le différentiel de vitesse entre l'arbre primaire 18 et le bâti 36 est faible et ne nécessite pas de synchronisation progressive.

Le système de synchronisation selon l'invention peut être appliqué non seulement à la synchronisation dans une boîte de vitesses, comme décrit en relation avec les figures 1 à 4, mais il peut être utilisé dans tout ensemble mécanique nécessitant la synchronisation de la vitesse de rotation d'un élément à un régime cible en utilisant la vitesse de rotation et l'inertie d'un deuxième élément par réinitialisation de la vitesse de rotation de l'organe tournant de synchronisation alternativement à la vitesse du premier et du deuxième élément. Un système de synchronisation selon l'invention peut ainsi être utilisé pour synchroniser un arbre tournant dans une machine outil, par exemple pour l'arrêter en interposant le système selon l'invention entre l'arbre tournant et le bâti de la machine.

## Revendications

1. Système de synchronisation adapté à synchroniser un premier élément tournant (18) ayant une première inertie avec un deuxième élément (36, 66) ayant une deuxième inertie pour ajuster la vitesse de rotation du premier élément tournant à un régime cible, le système de synchronisation comportant un organe tournant de synchronisation (34) et deux dispositifs coaxiaux d'accouplement (40, 42) ayant chacun d'une part une partie axialement mobile (40B, 42B) solidaire de l'organe tournant de synchronisation (34) et d'autre part une partie axialement fixe (40A, 42A), l'une (40A) des parties axialement fixes (40A, 42A) étant prévue pour tourner solidairement avec le premier élément tournant (18) et l'autre (42A) des parties axialement fixes étant prévue pour être reliée au deuxième élément (36, 66), les parties axialement mobiles (40B, 42B) pouvant être accouplées alternativement avec l'une et l'autre des parties axialement fixes (40A, 42A) par déplacement axial commandé de l'organe tournant de synchronisation (34) pour que la vitesse de rotation des parties axialement fixes (40A, 42A) soient alternativement ajustées à celle de l'organe tournant de synchronisation (34) par transfert alternatif de la première inertie et de la deuxième inertie à l'organe tournant de synchronisation (34) de manière que l'inertie de rotation de l'organe tournant de synchronisation (34) fasse varier la vitesse de rotation du premier élément tournant (18) jusqu'à ce que ce dernier atteigne son régime cible.

2. Système de synchronisation selon la revendication 1, **caractérisé en ce que** la partie axialement fixe (40A, 42A) et la partie axialement mobile (40B, 42B) des dispositifs d'accouplement (40, 42) sont des disques d'embrayage à accouplement brutal.

3. Système de synchronisation selon la revendication 2, **caractérisé en ce que** l'organe tournant de synchronisation (34) comporte deux arbres (70, 72) reliés entre eux par glissière (74) de manière à être axialement mobiles pour accoupler ou découpler la partie axialement fixe (40A, 42A) et la partie axialement mobile (40B, 42B) des dispositifs d'accouplement (40, 42) indépendamment les unes des autres.

4. Système de synchronisation selon la revendication 1, **caractérisé en ce que** les dispositifs d'accouplement (40, 42) comportent, sur les parties axialement fixes (40A, 42A) et les parties axialement mobiles (40B, 42B), des crabots pourvus de dentures (44) dont des faces biseautées entrant en contact d'engrènement pour crabotage provoquent automatiquement un dégagement des dentures (44) par coulissement de l'organe tournant de synchronisation (34).

5. Système de synchronisation selon la revendication 1, **caractérisé en ce qu'**au moins un des dispositifs d'accouplement (40, 42) est non progressif.

6. Sous ensemble (30) de boîte de vitesses de véhicule, adapté à être monté dans la boîte de vitesses pour ajuster les vitesses de rotation d'un engrenage (16) monté fou sur un arbre (18) de la boîte de vitesses et d'un baladeur (20) monté coulissant sur l'arbre (18) entre une position découplée de l'engrenage (16) et une position accouplée à l'engrenage (16), le baladeur (20) pouvant être passé de sa position accouplée à sa position découplée quand la différence de vitesse entre l'arbre (18) et l'engrenage (16) est inférieure à un seuil déterminé correspondant à un régime cible de l'arbre, **caractérisé en ce que** le sous ensemble (30) comporte un système de synchronisation conforme à l'une quelconque des revendications 1 à 5 dont l'une (40A) des parties axialement fixes (40A, 42A) est prévue pour tourner solidairement avec l'arbre (18) de la boîte de vitesses (10) en constituant le premier élément tournant ayant la première inertie et l'autre (42A) des parties axialement fixes est prévue pour être reliée à un élément (36, 66) de la boîte de vitesses par rapport auquel l'arbre (18) tourne, ce dernier élément constituant le deuxième élément ayant la deuxième inertie, de manière que l'inertie de rotation de l'organe tournant de synchronisation (34) fasse varier la vitesse de rotation de l'arbre (18) de la boîte de vitesses (10) jusqu'à ce que ce dernier atteigne son régime cible quand les parties axialement mobiles (40B, 42B) sont accouplées alternativement avec l'une et l'autre des parties axialement fixes (40A, 42A) par déplacement axial commandé de l'organe tournant de synchronisation (34).

7. Boîte de vitesses pour véhicule, comportant au moins un engrenage (16) monté fou sur un arbre (18) de la boîte de vitesses et un baladeur (20) monté coulissant sur l'arbre (18) entre une position découplée de l'engrenage (16) et une position accouplée à l'engrenage (16), le baladeur (20) pouvant être passé de sa position accouplée à sa position découplée quand la différence de vitesse entre l'arbre (18) et l'engrenage (16) est inférieure à un seuil déterminé correspondant à un régime cible de l'arbre, **caractérisée en ce que** la vitesse de rotation de l'arbre (18) est déterminée par un sous ensemble (30) conforme à la revendication précédente, l'arbre (18) étant lié à rotation avec l'une des parties axialement fixe (40A, 42A) des dispositifs d'accouplement et l'engrenage (16) étant un engrenage de transmission de couple d'un rapport de démultiplication de la boîte de vitesses (10).

8. Boîte de vitesses selon la revendication 7, **caractérisée en ce que** l'élément (36, 66) de la boîte de vitesses auquel est reliée l'une des parties fixes (40A, 42A) des dispositifs d'accouplement est une partie de bâti (36) de la boîte de vitesses (10), l'organe tournant de synchronisation (34) pouvant d'une part coulisser par rapport au bâti (36) de la boîte de vitesses quand la partie axialement mobile (40B, 42B) et la partie fixe (40A, 42A) des dispositifs d'accouplement (40, 42) sont entre une position accouplée et une position découplée et d'autre part freiner progressivement l'arbre (18) portant l'engrenage fou (16) et le baladeur (20) par accouplement alternatif des dispositifs d'accouplement (40, 42).

9. Procédé de fonctionnement d'une boîte de vitesses (10) conforme l'une quelconque des revendications 7 à 8, le procédé comportant au moins un cycle d'ajustement des vitesses de rotation de l'arbre (18) de la boîte de vitesses portant l'engrenage monté fou (16) et le baladeur (20) à un régime cible, lequel cycle comportant au moins une première étape dans laquelle ledit arbre (18) et l'organe tournant de synchronisation (34) sont accouplés puis découplés par action du dispositif d'accouplement (40) dont la partie axialement fixe (40A) tourne solidairement avec l'arbre (18), une deuxième étape consécutive à la première étape, dans laquelle l'organe tournant de synchronisation (34) et l'élément (36, 66) de la boîte de vitesses sont accouplés puis découplés par action de l'autre (42) des dispositifs d'accouplement (40, 42) et une troisième étape dans laquelle l'organe tournant de synchronisation (34) et l'arbre (18) sont encore accouplés.
